(19)

Europäisches
Patentamt
European
Patent Office
Office européen
des brevets

(11)  **EP 2 621 709 B1**

(12)  **EUROPEAN PATENT SPECIFICATION**

(45) Date of publication and mention
of the grant of the patent:
**17.05.2017   Bulletin 2017/20**

(21) Application number: **11763853.6**

(22) Date of filing: **27.09.2011**

(51) Int Cl.:
***B29C 55/06*** *(2006.01)*    ***C08L 67/02*** *(2006.01)*
***C08J 5/18*** *(2006.01)*

(86) International application number:
**PCT/EP2011/004823**

(87) International publication number:
**WO 2012/041482 (05.04.2012 Gazette 2012/14)**

(54) **POLYESTER-BASED TAPE, PROCESS FOR PRODUCING SAID TAPE AND USE THEREOF**

BAND AUF POLYESTERBASIS, VERFAHREN ZUR HERSTELLUNG DIESES BANDES UND
VERWENDUNG DAVON

BANDE À BASE DE POLYESTER, PROCESSUS DE PRODUCTION DE LADITE BANDE ET
UTILISATION CORRESPONDANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **30.09.2010   EP 10012351**

(43) Date of publication of application:
**07.08.2013   Bulletin 2013/32**

(73) Proprietors:
• **Saudi Basic Industries Corporation
Riyadh 11422 (SA)**
• **Starlinger & Co Gesellschaft m.b.H.
1060 Wien (AT)**

(72) Inventors:
• **BASHIR, Zahir
11422 Riyadh (SA)**

• **FÜRST, Herbert
AT-1060 Vienna (AT)**
• **SCHNEIDER, Franz
AT-1060 Vienna (AT)**
• **KRAUS, Robert
AT-1060 Vienna (AT)**
• **LEEB, Christian
AT-1060 Vienna (AT)**

(74) Representative: **Sabic Intellectual Property Group
Sabic Intellectual Property Department
P.O. Box 3008
6160 GA Geleen (NL)**

(56) References cited:
**EP-A1- 2 186 867      WO-A1-03/087200
WO-A1-2010/074576    DE-U1- 20 200 916**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

The invention relates to a tape comprising a thermoplastic polyester and a linear low density polyethylene. The invention further relates to a process for producing said tape and to the use of such tape.

It is generally known that the industrially established tape products are currently made from polypropylene (PP) and polyethylene (PE); the three main applications being high modulus tapes, weaving tapes, baler twines and rope strands (see F. Hensen, Man-Made Fiber Year Book (CTI), 45-48, 1992). It is also commonly recognized that PP is the dominant synthetic polymer for uniaxially-oriented tapes from slit film; but high density polyethylene is also used. PP tape production has been established since the 1960s and occurs on a large scale world-wide. The article "Production of polyolefin tapes", F. Hensen, Man-Made Fiber Year Book (CTI), 45-48, 1992 reviews the technology for making uniaxially-oriented polypropylene and polyethylene tapes. The process for uniaxially orienting PP tapes comprises the steps of (1) extruding a film into a water bath or a chill roller; (2) slitting it into a plurality of tapes; (3) heating the tapes and stretching them simultaneously in an oven; (4) heat setting them at a higher temperature and (5) winding each uniaxially-oriented tape on a bobbin.

A tape in general is understood to mean a ribbon of plastic film, whose thickness is very thin in relation to its length and width. In the polypropylene tape industry, the tape thickness is in the range of 0.02 to 0.10 mm (20 $\mu$m to 100 $\mu$m) and the width is from 1 to 60 mm [see K.J. Philips and T.K. Ghosh "The Technology of Polypropylene Tape Yarns : Processing and Applications", Textile Progress, Volume 33, (2003), pages 1 - 53]. That is, the tape has a high width-to-thickness ratio. Typically the width is between 50-100 times larger than the thickness. The length of the tape can be indefinite, as the ribbons are normally made with a continuous extrusion process. The most common is to have a well-controlled rectangular cross-section, which is desirable for uniform drawing behaviour; however, profiled sections (corrugated, ribbed etc.) are also known (see K.J. Philips and T.K. Ghosh "The Technology of Polypropylene Tape Yarns : Processing and Applications").

Specific tape dimensions are established in the polypropylene tape industry, see F. Hensen, Production of Polyolefin Tapes, CFI Man-made Fiber Year Book , 1992, pages 44-48; also, F. Hensen and Stausberg, chapter 9, "Extrusion of Film Tapes', pp 317, Plastics Extrusion Technology, Ed. F. Hensen, 2nd edition, Hanser, 1997.

Polypropylene based Weaving tapes generally have thicknesses in the range of 30-80 $\mu$m and a width of 1-3 mm. Polypropylene based strapping tape is exceptionally thick (300-600 $\mu$m) and generally has a width of between 4 and 16mm. A strapping tape is used to strap cartons and boxes.

The technical field of the present invention is the field of uniaxially oriented thin tapes from a predominantly polyester composition, with widths typically in the range of 1-9 mm, preferably 1-3 mm, and thicknesses typically in the range 30-100 microns.

These uniaxially oriented polyester tapes are intermediates to be used in other processes like weaving, to make woven-tape fabric. The products of weaving are the end articles such as for example sacks, flexible intermediate bulk containers, geotextiles and composites. Contrary to weaving tapes strapping tapes are generally wide and thick (thickness 300-600 microns) and as a result strapping tapes cannot be woven in standard looms. In fact strapping tapes are generally used as the final product (to bind boxes, cartons, pallets with bricks, textile bales etc.).

Weaving involves interlacing tapes to make a fabric. This is done in a machine called a loom. There are two types of industrial looms : circular and flat.

A circular loom has been especially designed to produce endless tubular or flat fabric from tapes. The warp tapes, i.e. the tapes that run in the machine direction of the fabric, are taken to the loom from two bobbin creels which guarantees equal warp tensioning, high fabric quality and reliable operation. During production, the warp bobbins, i.e. the bobbins containing the warp tape can be changed and joined quickly and easily - without switching off the loom. The weft, i.e. the tape running in orthogonal direction of the fabric during the weaving process, is inserted from weft bobbins (bobbins containing the weft tape) by for example six shuttles which run in a reed designed for the purpose. The fabric width can be adjusted simply by changing the warp ring. The tubular fabric is taken via a spreader system to a continuously-powered take-up roller and consequently wound up on a fabric winder. In order for a tape to be woven in a circular or flat loom the tape has a thickness of less than 300 microns, preferably less than 100 microns and a width of less than 7mm.

Thermoplastic polyesters are essentially linear polymeric molecules containing ester groups in their chemical structure and are known to be truly versatile materials, being commonly used as fibers, plastics and films; in composites and elastomers; and as coatings. The production of polyesters by condensation of polyfunctional carboxylic acids with polyfunctional alcohols (or their ester-forming derivatives) is well known in the art, and is described in *e.g.* Encyclopaedia of Polymer Science and Engineering, 2nd ed., volume 12, John Wiley and Sons, New York, 1988. The most common thermoplastic polyester is polyethylene terephthalate (PET); this polyester is the cheapest and is industrially produced on a large scale. It is mainly used in industry for production of textile fibres, filaments, films and bottles.

It is commonly known that PET allows the possibility for obtaining higher tenacity (or specific tensile strength), higher modulus, better resistance to creep, transparency and gloss for the products made from it, compared with the products made of PP. Also, PET retains its mechanical properties to higher temperatures than PP. PP softens appreciably at 90°C and at 95°C, its tenacity is half that at 20°C. One factor that affects creep is the glass transition temperature $T_g$ and its relation to room temperature. For PP, $T_g$ is between -15 to 10°C, whereas for PET it is about 78°C. Another important aspect about PET is that it has the potential to be recycled with its properties restored. It is well known that polymers degrade and there is a decrease in molecular weight during melt extrusion. In the case of PP, if recycled, the molecular weight of the polymer cannot be re-built; whereas with PET, the molecular weight can be restored to the original value by melt or solid-state polycondensation.

PET-based tapes are commonly known and have been industrially produced for video and audio magnetic tape. Such PET tapes are produced by slitting a biaxially-oriented PET (BOPET) film. The method of production of BOPET film for audio tape is described by W. Goerlitz and A. Ito in "Substrates for flexible magnetic recording media: The role of base films for modern performance requirements", Journal of Magnetism and Magnetic Materials, volume 120, 76-82, 1993. However, making PET tape from BOPET film is very expensive and its application was thus limited to audio and video tapes. The BOPET tape-process involves drying the PET resin, melt extrusion and casting of an amorphous film, biaxial stretching using a tenter frame that passes through a heated cabinet, followed by heat setting and then slitting the film into tapes. In the uniaxially-drawn tape process, the stretching process involves drawing the tapes through a heating cabinet, between rollers. In the BOPET line, the tenter frame for effecting the transverse direction (TD) draw raises the cost of the machinery to about 10 times that of a uniaxially-drawn tape process.

WO 03/087200 discloses a polyester strapping comprising more than 92% by weight polyester and less than 8% by weight of additives comprising one or more Polyolefins and optional additional additives, wherein the one or more Polyolefins constitute less than 3% by weight of the strapping. Examples of Polyolefins disclosed in WO 03/087200 include linear low density polyethylene, branched low density polyethylene, high density polyethylene and polypropylene. The strapping may have a width of about 0.5cm to 3.0 cm and a thickness of about 0.03cm to about 0.20.

US 6589463B1 relates to a process for producing mono-axially oriented polyethylene terephtalate film having increased mechanical strength in the machine direction. The film may be used as tear tape, carton tape, industrial tape to hold together heavy loads, or pull tabs on containers.

EP 0361758A2 discloses a yarn of substantially flat cross-section comprising a poly(ethylene terephthalate) component having dispersed therein about 17 wt% to about 43 wt% of a substantially crystalline propylene polymer component. The tape yarn is suitable for weaving, particularly into primary carpet backing fabrics for tufted carpet tiles and automotive carpets.

There is a need to make uniaxially-oriented PET tapes from a slit film process. The present inventors have found two problems related to the the production of uniaxaially-oriented PET tape suitable for weaving in standard circular or flat looms.

Firstly there is the tendency of thin PET tapes to stick together and twin when produced as a closely-spaced multitude, from slit film. Twinning as used herein means two tapes that lie over each other and act as one. The place where this usually starts is from the godets (after the slitter) that lead the tapes into the drawing oven. Godets are rollers on which the tapes are wrapped after the slitter and which transport the tapes into the drawing oven. Twinning may however also occur after the ovens, on the way to the winding station.

Secondly, there are difficulties in winding up thin PET tapes on flangeless tubes. Such difficulties lead to irregularly shaped bobbins. For example it was found that bobbins of thin tape made from pure PET may form form dog-bone shaped cylinders. The cause of these irregularly shaped bobbins is believed to be the friction between two PET layers. During cross winding of a tape the tape winding direction reverses at the outer ends of the bobbin. The PET tape resists this reversal and drags on itself, thereby leading to deposition of more tape at the ends of the bobbins. This leads to bobbins which are thicker at both ends, and less so in the middle. If the bobbin is stood on its end, it has a concave shape instead of a cylindrical one. Such defective bobbins are difficult to feed to a loom used for weaving PET tapes.

An objective of the present invention is therefore to provide a polyester tape that overcomes at least part of the drawbacks of the tapes known from the prior art. Another object of the present invention is to provide a polyester tape that can be wound to form bobbins having a regular shape at industrial, relatively high speeds. An industrial relatively high speed is a speed above about 100 m/min.

This object is achieved according to the invention with a tape comprising (i) from about 75 wt% to about 99.9 wt% of a thermoplastic polyester, (ii) from 0.1 wt% to about 25 wt% of a linear low-density polyethylene and (iii) from 0 wt% to about 5 wt% of other components, wherein said tape has a thickness from 5μm to 250 μm and a width from 0.5mm to 7mm.

The present inventors found that certain polyolefins when used as additives to the polyester allowed the manufacture of polyester tapes that, due to their low frictional heating and their reduced adhesion, do not stick to each other and do not twin after high speed slitting. Moreover they can be collected onto bobbins in continuous operation, at industrial speeds of higher than 100 m/min. The obtained bobbins show no shape irregularities. Also, no voiding occurs on drawing the film. The tapes do not break even during processing at industrial production speeds, i.e. higher than 100 m/min to 400 m/min. Furthermore, the articles made from said tapes show good optical properties, such as good gloss, relatively low haze and high clarity.

It is true that several prior art documents disclose compositions comprising a polyester and a linear low-density polyethylene (LLDPE). For instance, L. Marquez et al., Polymer Bulletin, vol. 41, nr. 2, 191-198, 1998 analyze the interactions between the component of some compatibilised blends of PET and LLDPE. G. Guerrica-Echevarria et al., Polymer Engineering and Science 46(2), 172-180, 2006 study the adhesion level in blends of PET with up to 30 wt% poly(ethylene-octene) copolymer. US 3,548,048 relates to producing a fibrillated product by making a blend of two polymers having substantially different melting points, the two polymers being particularly selected from LDPE, ethylene/butene-1 copolymer, high density polyethylene, PP, poly(butene-1), poly(pentene-1), poly(3-methylbutene-1), poly(4-methylpentene-1), nylon 6/6, nylon 6/10, nylon 6, PET, and poly(1,4-cyclohexylene dimethylene terephthalate). Specific examples of polyester-based blends given in this document are polyester/PP, polyester/nylons and polyester/poly(4-methylpentene-1). However, none of these documents specifically discloses a tape comprising a polyester component and a LLDPE component in specific amounts, nor suggests that by employing such components, tapes that do not stick to each other and twin after slitting, that can be drawn without breakage at relatively high drawing ratios, having very good mechanical properties, even at high industrial production speeds can be obtained.

Within the context of the present invention, a tape in general is understood to be an unsupported section of plastic material with a low thickness in relation to its length and width. The dimensions of a tape may vary widely depending on the application, but usually a thickness is in the range of from 5 to 2000 $\mu$m, and a width may vary from 0.5 mm to 50 mm. In order for a tape to be weavable, i.e. to be suitable as a raw material for a woven fabric, the thickness is in the order of from about 5$\mu$ to 300$\mu$m and the width from about 0.5mm to 7 mm. The width of a warp tape is usually smaller than the width of the weft tape, so that the upper limit for warp tape is preferably 5mm.

The length of a tape can be indefinite, as the tapes are normally made with a continuous extrusion process. A tape can be ready-made to its width via extrusion, but making a multitude of tapes simultaneously would need multiple expensive dies or spinnerets and drawing/winding equipment; as in multifilament fibre spinning technology. Therefore, tapes are generally made on industrial scale by extruding a wider sheet or film, and subsequently slitting it into segments of desired width. A further advantage of this slitting technology is that tapes obtained have a well-controlled rectangular cross-section, which is desirable for uniform drawing behavior.

The tape according to the present invention has a thickness of about 5 $\mu$m to about 250 $\mu$m.

More preferably the thickness of the tape is higher than 10 $\mu$m; 15 $\mu$m; 20 $\mu$m; 22 $\mu$m; 25 $\mu$m; 30 $\mu$m; 50 $\mu$m or 55 $\mu$m whereas it is lower than 100 $\mu$m; 80 $\mu$m; 70 $\mu$m or 60 $\mu$m. Lower thickness, especially below 20$\mu$m, of the tape causes friction and static problems during processing, making handling of the tapes difficult. Higher thickness of the tape generates difficulties in slitting the tape.

The width of the tape according to the present invention is from 0.5 to 7 mm, more preferably higher than 0.7 mm, 0.8 mm, 0.9 mm, 1 mm and lower than 5 mm, 3 mm, 2.5 mm or 2 mm.

The thermoplastic polyester (i) according to the present invention may be a crystallisable polyester derived from at least one alcohol-based compound and at least one carboxylic acid-based compound.

The carboxylic acid-based compound may be a carboxylic acid or an ester-forming derivative thereof, like an ester, especially an alkyl- or hydroalkyl-ester, or acid chloride. Preferably, a dicarboxylic acid of the formula HOOC-R-COOH, wherein R is a - linear or branched - alkyl group, an arylene group, an alkenylene group or a combination thereof is used as carboxylic acid-based compound. Preferably, R has about 2 to 30, preferably about 4 to 15 carbon atoms. Suitable examples of carboxylic acid compounds may include saturated aliphatic dicarboxylic acids such as oxalic acid, malonic acid, succinic acid, gluratic acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 1,3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, 2,5-norbornanedicarboxylic acid, and dimeric acid; unsaturated aliphatic dicarboxylic acids such as fumaric acid, maleic acid, and itaconic acid; and aromatic dicarboxylic acid such as orthophthalic acid, isophthalic acid, terephthalic acid, 5-(alkali metal)sulfoisophthalic acid, diphenic acid, 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 4,4,-biphenyldicarboxylic acid, 4,4'-biphenylsulfonedicarboxylic acid, 4,4'-biphenyl ether dicarboxylic acid, 1,2-bis(phenoxy)ethane-p,p'-dicarboxylic acid, pamoic acid, and anthracenedicarboxylic acid. Other dicarboxylic acids, and minor amounts of polycarboxylic acids or hydroxycarboxylic acids may also be used as constituent components.

More preferably, the carboxylic acid-based compound is at least one compound selected from the group comprising terephthalic acid, isophthalic acid, naphthalenic diacid, succinic acid, adipic acid, phthalic acid, glutaric acid, oxalic acid, and maleic acid. Most preferably, the carboxylic acid compound is terephthalic acid.

The alcohol-based compound may be a hydroxy-functional compound or an ester-forming derivative thereof, like an ester of a lower aliphatic carboxylic acid, such as acetic acid. Preferably, the alcohol-based compound is a bifunctional alcohol, like an alkylene glycol of the formula HO-R'-OH, a polyalkylene glycol having the formula HO-[R"-O-]$_n$-H or combinations thereof, wherein R' is an alkylene group, linear or branched, having 2 to about 10, preferably 2 to 4 carbon atoms, and wherein R", being the same or different, is an alkylene group having 1 to about 10, preferably 1 to 5 carbon atoms. Suitable examples of the alcohol-based compound include aliphatic glycols such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentyl glycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, 1,12-dodecanediol, polyethylene glycol, polytrimethylene glycol, and polytetramethylene glycol; and aromatic glycols such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and glycols obtained by adding ethylene oxide to these glycols. Preferably, the alcohol-based compound is at least one compound selected from the group comprising ethylene glycol, 1,3-propylene glycol, 1,4-butylene glycol, and 1,4-cyclohexanedimethanol; and more preferably, ethylene glycol.

Small amounts of polyhydric alcohols may also be used in combination with these glycols. Suitable examples of polyhydric alcohols are trimethylolmethane, trimethylolethane, trimethylolpropane, pentaerythritol, glycerol, and hexanetriol. The hydroxycarboxylic acids may also be used in combination. Examples of hydroxycarboxylic acids may include lactic acid, citric acid, malic acid, tartaric acid, hydroxyacetic acid, 3-hydroxybutyric acid, p-hydroxybenzoic acid, p-(2-hydroxyethoxy)benzoic acid, 4-hydroxycyclohexanecarboxylic acid and their ester-forming derivatives. Also, cyclic esters in combination may be used in present invention. Examples of cyclic esters include ε-caprolactone, β-propiolactone, β-methyl-β-propiolactone δ-valerolactone, glycollide, and lactide.

The initial molar ratio of the carboxylic acid-based compound and the alcohol-based compound may be in the range of about 1:1 to about 1:3, preferably 1:1.2 to 1:2. Optimum ratio generally depends on reaction temperatures and time.

Terephthalic acid and ethylene glycol are the most preferred starting compounds for the thermoplastic polyester, according to the present invention.

Any suitable comonomer may be optionally contained in the thermoplastic polyester, such as isophthalic acid; 1, 4-cyclohexane dimethanol; branching comonomers, such as pentaerythritol or pyromellitic dianyhdride; and/or mixtures thereof. Preferably, isophthalic acid comonomer may be contained in the thermoplastic polyester component of the tape according to the present invention. Said comonomers may be contained in an amount of up to about 20 mol%, preferably about 1 to about 10 mol% or about 1 to about 5 mol%.

Suitable thermoplastic polyester component of the tape according to the invention have a molar mass that results in a melt viscosity that allows easy and stable extrusion, and which results in a desired level of mechanical properties of products, as known to a skilled person. Typically, an indication for the molar mass of thermoplastic polyesters is derived from measuring the viscosity of diluted solutions; for example expressed as Intrinsic Viscosity (I.V.). Suitable polyesters have an I.V. in the range of about 0.5 dUg to about 2.5 dUg. A certain minimum I.V. is needed for extrudability and higher I.V. generally results in better mechanical properties, but too high a viscosity may hamper processing behaviour. Thus, I.V. is preferably at least 0.50, 0.55, 0.6, 0.65 or even 0.7 dUg, and at most 2.0, 1.8, 1.6 or 1.2 dUg, measured in phenol-1, 2 dichlorobenzene, at 25°C.

Preferably, the thermoplastic polyester according to the present invention is a polyethylene terephthalate (PET), polybutylene terephthalate (PBT), polypropylene terephthalate, poly(1,4-cyclohexanedimethylene terephthalate), polyethylene naphthalate (PEN), polybutylene naphthalate, polypropylene naphthalate, and their copolymers, and among them, polyethylene terephthalate homopolymer and copolymers are particularly preferred.

Copolymers that contain at least 50 mol% and preferably, at least 70 mol% or even at least 80, 90, 95 or 98 mol% of the ethylene-terephthalate repeating units may be also employed in the tape according to the invention. A suitable example is the standard bottle grade PET copolymers. Also, blends of various polyesters, such as copolymers of ethylene terephthalate with different comonomers having different intrinsic viscosities may also be used. For instance, a blend comprising about 50 wt% PET homopolymer and about 50 wt% copolymer of PET containing 2 wt% isophthalic acid comonomer may also be applied. Recycled polyesters or blends of polyesters, *e.g.* virgin PET with a recycled polyester, *e.g.* recycled PET may also be used in the tape according to the present invention, as the cost decreases. Particularly, a blend composition comprising PET homopolymer in an amount of from 50 wt% to 99 wt% and recycled PET in an amount of from 1 wt% to 50 wt% can be used in the tapes of the present invention, the amount of each blend component depending on the desired properties of the product obtained. The recycled PET having an I.V. of at least 0.70 dUg may be generally derived from recycled PET bottle flakes, and may contain for example isophthalic acid or 1, 4-cyclohexane dimethanol comonomer in various amounts, such as of from 0.3 wt% to 3 wt%.

Most preferably, the thermoplastic polyester is a polyethylene terephthalate homopolymer due to its low cost and good mechanical properties, such as high mechanical strength and low shrinkage. The PET homopolymer is generally known to be made by polycondensation of terephthalic acid and ethylene glycol comonomers and may contain less than about 3 wt% diethylene glycol comonomer formed in situ, preferably less than 1.5 wt%.

The thermoplastic polyester in the tape according to the present invention may be produced by any method known in the art, such as by polycondensation. Esterification and polycondensation steps in such polycondensation reaction may be conducted at temperatures known to a skilled man; for example, PET esterification will be typically performed at about 230 to about 260 °C and PET polycondensation may be conducted at a temperature from about 270 to about 290 °C under reduced pressure.

The polycondensation may be conducted in a split operation, for example by employing first a melt-phase polycondensation step and a subsequent solid-phase or solid-state polycondensation step (SSP). The polycondensation reaction may be performed by any conventional route, such as solution polycondensation and melt polycondensation. Preferably, polycondensation is conducted in the melt phase under high vacuum in a batch process, until a desired intrinsic viscosity of the precursor polyester is obtained, in case of PET for example of about 0.55 to about 1 dL/g; preferably about 0.55 to about 0.75 dL/g; and more preferably from about 0.60 to about 0.65 dUg. More preferably, polycondensation is conducted in the melt phase in a continuous process using a train of reactors in series for esterification and polycondensation. In a continuous PET process, for example, the ethylene glycol generated in the reaction can be optionally condensed and added back into the process.

A solid-state polycondensation (SSP) step may be conducted by applying any known techniques, for example it may be performed batch wise or in a continuous operation. The precursor polyester from melt polycondensation, typically having an I.V. of about 0.65 dL/g, may be granulated or pelletized in any size and shape, and - preferably after crystallizing the pellets - may be subjected to solid-state polycondensation at a temperature between the glass transition temperature and the melting point of the polymer, thereby increasing the intrinsic viscosity of the polyester; in case of PET typically to a value of about 0.72 to 0.84 dL/g. The SSP may be conducted in vacuum or by passing an inert gas stream like a nitrogen stream through the bed of pellets or granules, at a temperature in a range of about 180 to 230 °C. Various solid stating processes are known in the art; such processes are for instance described in US4064112 and US4161578.

The amount of thermoplastic polyester used in the tape according to the invention is from about 75 wt% to about 99.9 wt%, based on the total composition. Preferably, the amount of thermoplastic polyester composition is at least 78 wt%; 80 wt%; 85 wt%; 90 wt%; 95 wt% or 96 wt% and at most 99.5 wt%; 99 wt%; 98.5 wt%; 98 wt%; 97.5 wt% or 97 wt%, based on the total composition. Higher amounts of the thermoplastic polyester cause tape sticking after slitting and winding-up problems, while lower polyester amounts in the tape give lower tenacity and higher shrinkage.

The tape according to the present invention comprises (i) from about 75 wt% to about 99.9 wt% of a thermoplastic polyester and (ii) from 0.1 wt% to about 25 wt% of a linear low-density polyethylene, based on the total composition. By introducing LLDPE, the tapes can be drawn at higher drawing ratios while reducing sticking and twinning of the tapes to a minimum, at the same time maintaining very good mechanical properties, such as higher tenacity, low shrinkage and high elongation at break, even at high industrial production speeds. Preferably, the tape comprises at least about 0.2 wt%; 0.5 wt%; 1 wt%; 1.5 wt%; 2 wt%; 2.5 wt%; 3 wt%; 4 wt%; 5 wt% or 8 wt%; and at most about 22 wt%; 20 wt%; 18 wt%; 15 wt%; 12 wt% or 10 wt% of a linear low-density polyethylene, based on the total composition. Higher amounts of LLDPE cause decrease in tenacity and decrease in modulus with increasing temperature, while lower LLDPE amounts lead to sticking and/or twinning of the tape after slitting.

The linear low-density polyethylene (LLDPE) in the tape composition according to the present invention is a substantially linear copolymer having short branches, namely comprising ethylene and a $C_4$-$C_{10}$ alpha-olefin co-monomer or a mixture (of at least two $C_4$-$C_{10}$ alpha olefin comonomers) thereof. The LLDPE may be an ethylene $C_5$-$C_{10}$ alpha olefin copolymer. Preferred alpha-olefin co-monomers include 1-butene, 1-pentene, 1-hexene, 1-heptene and 1-octene, known under IUPAC as but-1-ene, pent-1-ene, hex-1-ene, hept-1-ene and oct-1-ene respectively. More preferably, the alpha-olefin comonomer is 1-butene, 1-hexene and 1-octene, as no stickiness and twinning of the tapes occurs after slitting, particularly at high speed; the bobbins do not show any shape irregularities and the products obtained show good mechanical properties.

The alpha-olefin co-monomer may be present in the LLDPE in an amount of about 1 to about 20 wt% based on the ethylene-alpha olefin copolymer, preferably in an amount of from about 3 to about 15 wt%. The LLDPE may be grafted with compatibilising reagents, for example with maleic anhydride or glycidyl methacrylate, in order to increase the compatibility of the polyolefin with the PET.

Any type of LLDPE known in the art may be used. The density of the LLDPE may range between 915 kg/m$^3$ and 940 kg/m$^3$. The melt flow index (190°C/2.16Kg) may range between 0.3 g / 10 min and 50 g / 10 min, preferably between 1 g / 10 min and 10 g / 10 min.

LLDPE may be produced by employing any method known in the art. The production processes for LLDPE are summarized in Handbook of Polyethylene by A. Peacock, Dekker ed., ISBN 0824795466, 43-66, 2000. The catalysts to produce LLDPE include Ziegler Natta catalysts, Phillips catalysts and single site catalysts. The latter class is a family of different classes of compounds, metallocene catalysts being one of them. As elucidated at pages 53-54 of said Handbook, a Ziegler-Natta, catalyzed polymer is obtained via the interaction of an organometallic compound or hydride of a Group I-III metal with a derivative of a Group IV-VIII transition metal. An example of a (modified) Ziegler-Natta catalyst is a catalyst based on titanium tetrachloride and the organometallic compound is triethylaluminium. A difference between metallocene catalysts and Ziegler Natta catalysts is the distribution of active sites. Ziegler Natta catalysts are heterogeneous and have multiple active sites. Consequently, polymers produced with these different catalysts will be different regarding for example the molecular weight distribution and the comonomer distribution.

Suitable technologies for the manufacture of LLDPE include gas-phase fluidized-bed polymerization, polymerization in solution, polymerization in a polymer melt under very high ethylene pressure, and slurry polymerization, as known by the skilled person.

The tape according to the present invention also contains (iii) from 0 wt% to about 5 wt% other components, with the total sum of the components (i), (ii) and (iii) preferably being 100 wt%. Other components may be any conventional additives as known to the skilled person, like stabilizers, such as heat-stabilizers, anti-oxidants, and ultraviolet light stabilizers; processing aids such as lubricants and anti-blocking agents; and colorants, both pigments and dyes; opacifiers; compatibilisers, such as a copolymer of ethylene, acrylic acid ester and maleic anhydride or glycidyl methacrylate; catalyst residues may also be present. Such components may be added with either or both of the polymer components or separately, at any time and in any order. Generally, each of such additives is used in an amount of some tenths of a percent up to some wt%; the composition typically contains at most 5 wt% of customary additives, preferably at most about 4 wt%, 3 wt%, 2 wt% or even 1 wt%.

The process for making the tape according to the present invention comprises the steps of:

> (a) extruding a composition comprising from i) about 75 wt% to about 99.9 wt% of a thermoplastic polyester; (ii) from 0.1 wt% to about 25 wt% of a linear low-density polyethylene; and (iii) from 0 wt% to about 5 wt% of other components; into a molten film and quenching said film;
> (b) slitting and drawing the obtained film in the longitudinal direction to form a plurality of uniaxially oriented tapes;
> (c) heat-setting the uniaxially oriented tapes.

In a further step the tapes may be wound on a cylindrical bobbin which has an axial length that is greater than the width of the tape. Preferably the length of the bobbin is from about 15 to about 50cm for weaving tapes having a width less than or equal to 7mm.

Weavable tape, having a width of for example 3 mm may be wound to form bobbins having a length in axial direction of about 20 or 30 cm long. High speed cross-winders are preferably used for that purpose. The tape is wound on a flangeless cylindrical wind-up tube, and the assembly is then called a bobbin. The tapes have to be wound across the entire length of the tube so that the crossing layers create a firm package, with as few gaps as possible; but at the same time, the bobbins should have the capacity to be unwound easily for subsequent processing. The tape moves in a transverse direction across the bobbin length at an angle $\alpha$, which is a function of a fixed transmission ratio between double stroke and spindle r.p.m. plus a transmission factor called $\delta$-value, which is determined by the coil centres. To attain an acceptable appearance of the package, it is preferred to calculate the small additional $\delta$-value. The second important factor to get an acceptable package is a minimized tape tension. An accurate mechanical transmission from the traverse mechanism to the tape is maintained by means of ceramic guides. Therefore it is preferred to have a tape surface with a low friction coefficient to ceramic surfaces, otherwise passing the tape guide would create excessive winding tension on the tape.

The thermoplastic polyester used in the process according to the present invention as defined herein has to be substantially free of moisture in order to avoid hydrolysis of the thermoplastic polyester during processing resulting in loss of molecular weight and mechanical properties. The thermoplastic polyester may have up 50 ppm moisture; preferably, 10 ppm to 40 ppm; more preferably, 20 ppm to 30 ppm; and most preferably 10 to 15 ppm or less than 10 ppm. The moisture content can be estimated by the I.V. drop (the difference in I.V. of chips and cast film). This I.V. drop may be less than 0.05 dUg; preferably, less than 0.03 dUg; and most preferably, less than 0.02 dUg for a moisture content of less than 50 ppm. The LLDPE may be used without drying in the process according to the present invention.

Drying of the thermoplastic polyester can be conducted in accordance with any known procedures. For instance, in vacuum ovens, double cone rotary vacuum dryers, fluidized bed dryers, hopper dryers, dry or hot air circulating, dehumidifying ovens, infrared heaters or twin-screw extruder systems with on-line venting may be used. The thermoplastic polyester component can be dried in the absence of the LLDPE component at temperatures of about 148°C to about 177°C for about 3 to 5 hours using dehumidified air with a dew point of about -40°C.

The thermoplastic polyester component and the LLDPE component can be used in any form in the process according to the present invention, such as in the form of powder, pellets, granules, (bottle) flakes; preferably, they can be used in the form of pellets.

The two polymer components can be added in the process according to the present invention in any order; at any time and in any conventional manner. For instance, the components may be added simultaneously or consecutively in the extruder or they can form a pre-mixture or a pre-blend of pellets, which may be then added in the extruder by using any known means, such as a dryer hopper; preferably, without substantial contact with the atmosphere in order to avoid absorption of moisture. The physical pre-mixture of the two polymer components employed in this invention can be obtained in any conventional manner such as by dry-mixing pellets of the polymer components, solution blending or any other known technique, such as by using Banbury mixers, roll mills, plastographs, and the like. The LLDPE may also be incorporated during melt polymerization of the polyester. Preferably, the thermoplastic polyester component is dried and then fed to the extruder, followed by adding LLDPE component to the extruder, as putting LLDPE pellets in the polyester drier may cause fouling due to LLDPE melting. In such case, conventional separate metering devices can be used for feeding the LLDPE component to the extruder, such as a masterbatch dosing device. Preferably, LLDPE component is added to the extruder by using a masterbatch dosing device attached to the extruder.

The other components (iii) may be added in the process according to the present invention in any order; at any time and in any conventional manner. Suitable examples include adding simultaneously the other components with the thermoplastic polyester or with the LLDPE; or during ester and ethylene polymerization reactions; or in the extruder, as a second masterbatch; or they may be already present in the LLDPE itself. Preferably, the other components (iii) are added with the LLDPE from the masterbatch dosing unit. Alternatively, the masterbatch carrier for the said components may be LLDPE.

The composition may be extruded to form a molten substantially amorphous film or web, by using any known techniques, as described for example in US 7,803,857. To secure a more stable drawing process, the thermoplastic polyester phase of the film is preferably substantially amorphous, having a crystallinity of at most 5%, as measured by the density method. The density of the thermoplastic polyester/LLDPE mixture may be lower than 1333 kg/m$^3$. Preferably the polyester phase has less than 3% crystallinity, more preferably less than 2 or 1%, and most preferably has no measurable crystallinity.

The extrusion temperature may range from about 270 to about 300 °C, preferably from about 275 to about 285 °C. Higher temperatures are avoided to minimize degradation of the resin components. Melt mixing may be efficiently performed by using standard screw designs of the type conventionally used for polyester extrusion, that may have length to diameter ratios of at least 15:1 or internal mixers for example as described in Chapter 15 of book Polyethylene, 2nd edition, by A. Renfred, 1960, IIliffe of London.

Typically, a flat film die is used to extrude the polymer resin melt into a molten substantially amorphous film, also known in the prior art as web, that is then quenched to form a solid film. The dimensions of the die are chosen such to give a desired thickness and width for the film after drawing. A certain minimum thickness is needed to give a stable and uniform film extrusion; preferably the thickness is at least about 10 μm, more preferably at least 20 μm. Quenching can be done using known methods; preferably the film is casted onto one or more cooled drum(s) or chilled roller(s), which are preferably polished, to better control surface smoothness of the film, at a temperature of about 10 °C to about 30 °C, preferably of about 12 °C to about 20 °C. The molten film has preferably a thickness of at most about 3 mm, more preferably at most 300 μm, 250 μm or 150 μm.

The width of the die and molten film may vary widely, for example from 0.1 to 3000 mm, preferably from 100 to 2000 mm. For example, for making uniaxially oriented tapes that have a finished width in the order of about 0.5 to about 7 mm, it is preferred to extrude a film, for example from about 1 to about 3 m wide, to trim the edges and then to slit the remaining film into tapes of desired width, along its length, before or after drawing, or even after heat-setting, by adjusting the spacing between the cutting edges, forming a plurality of uniaxially oriented drawn tapes. The quenched film may be passed continuously over a series of cutting edges although other techniques, such as slitting with lasers may also be employed.

Drawing the solid film may be conducted before or after slitting the film into a plurality of tapes. Preferably, the quenched (cast) film is first slit into a plurality of tapes and then drawn as the film immediately after casting is not brittle and resistant to cutting; whereas if it is drawn and heat-set first, the film crystallizes and becomes harder and more brittle for slitting.

The solid film or the slit tapes have to be drawn lengthwise, *i.e.* plastically deformed in at least one direction, at a draw ratio, *i.e.* the ratio of the length of the plastically deformed film or tape in the direction of stretching to its original length in the same direction before stretching, of about 4.5:1 to about 7.5:1, preferably a draw ratio of at least 5:1; 5.3:1; 5.5:1 or 6:1 and at most 7:1; 6.5:1; 6.3:1; 6.2:1 or 6.1:1, to orient the film or the tapes and increase strength and tenacity thereof in the lengthwise direction. Higher draw ratios give higher modulus and tenacity, yet a too high a draw ratio would lead to breakage on line. Drawing may be accomplished by stretching the solid molten film or the tapes heated to a temperature above glass transition temperature of the polyester component to soften the film or the tapes and permit orientation of the polymer molecules. Preferably, temperatures of about 75 °C to about 130°C are employed to facilitate stretching without breakage of the film or the tapes. Suitably, stretching is conducted by passing the slit tapes or by passing the film through a heating zone maintained at a certain temperature from feed rolls to take up rolls, with the latter rotating faster than the former to provide the desired degree of stretching. Typical heating zones may include an oven, a heated surface or other suitable means, preferably an oven. Average residence time of the film or the tapes in contacted with a heating zone may be from about 0.5 seconds to about 2 seconds.

Drawing may be conducted in one or more steps to achieve a final draw ratio of about 4.5:1 to about 7.5:1.

Preferably, drawing at a ratio of 5:1 to 6:1 is completed at about 85 °C to about 130°C, preferably at about 90 °C to about 100 °C in a single step to attain tapes, after slitting the solid film, having the desired a finished thickness at production speeds higher than 100 m/min, said tapes having tenacities of higher than 5 g/denier; preferably higher than 7 g/denier; most preferably higher than 7.5 g/denier (tensile strength of 945 MPa) and low shrinkage, *e.g.* less than 7 %, preferably less than 5 % at high temperatures, such as 130 °C.

Drawing is generally effected by guiding the amorphous film or tapes first over a set of feed rollers and then over a set of draw rollers that are operated at higher speed, with heating of the film. In order to control variations in draw ratio, preferably drawing is effected with feed and draw rollers, the speed of which can be controlled in such way that speed fluctuations of at most about 1% occur, more preferably speed fluctuations are at most about 0.7; 0.5 or 0.3%. Further, the film or tape thickness should be as uniform as possible; in this regard, it is preferred to draw a film or a tape after trimming the edges.

The drawing rate (take-up speed at the bobbins at the end of the line) may be at least about 1 m/min, preferably at least about 2, 3, 4, 5, 10, 15, 20, 50, or even 100 m/min and up to about 600, 550, 500, 400, 350, 250 or 200 m/min. Too high a drawing rate may induce breakage. Preferably, a plurality of tapes, typically in a number of about 200 to about 400 tapes can be drawn simultaneously at industrial speed of higher than 100 m/min. A current practical upper limit for the speed is about 400 m/min. The step of drawing the film or the tapes in the process according to the present invention may be performed continuously at said high drawing rates, without sticking and twinning of the slit tapes and without voids occurring and breakage of the film or the tapes, while still maintaining high mechanical properties of the product.

The step of heat-setting the uniaxially-oriented tapes obtained can be performed off-line but is preferably done in-line, using equipment and applying conditions known to a skilled person. Typically, the temperature for heat-setting is in the range of about 140 to about 250 °C; an additional low draw ratio, typically of about 1.05:1, is generally applied to prevent relaxation effects. Once heat-set, the tapes are stable and do not form ripples.

After heat-setting, the uniaxially-oriented polyester tapes according to the present invention can be wound up onto wind-up tubes by applying any conventional method, such as for example cross-winding. The polyester tapes may be wound across the entire length of a flangeless cylindrical wind-up tube so that the crossing layers create a firm package (i.e. cylindrical bobbins), with as few gaps as possible and at the same time keeping the capacity of the bobbins to be unwound easily for subsequent weaving in the loom. There are two winding methods generally known in the art, *i.e.* friction winding and cross-winding method, the later being preferred according to the present invention as it gives a more neat bobbin appearance. The number of the cross-winding machines in the tape production line may be between 100 and 600, depending on the width and the working width of different types of tape lines. Standard bobbins with regular shape that fit the weaving loom (*e.g.* cylindrical bobbins with no concave or convex shape-defects) can be obtained according to the present invention.

The tapes may further be subjected to one or more additional steps to establish other desired properties; like a chemical treatment step, a corona-treatment, or a coating step.

The process to make the polyester tapes according to the present invention is less complex than that used for spinning and stretching of polyester filaments, known in the prior art; the latter requires for instance expensive spinnerets.

The tapes according to the present invention can be used to make finished and semi-finished articles, woven fabrics, suited for many - mainly industrial - end uses like geo-textiles and the like; fibrillated tape yarn, twines; ropes; as audio magnetic tapes; as metallic yarns; as pressure sensitive tapes, big packs, such as flexible intermediate bulk containers (FIBC); carpet backing.

The invention will be further elucidated by the following non-restrictive example.

**Examples**

*Machine 1*

A laboratory-scale line provided with a 150 liters hot air drier for drying the polyester, for 5 hours at 170°C, a 45 mm single-screw extruder having a smooth feeding section and a PET screw with the length to diameter (l/D) ratio of 28 was used. The extrusion temperature was 280 °C. The film was cast by using a 150 mm wide slot die at a temperature of 280 °C. Next, the film was fixed on a 400 mm chill roller during quenching, for which an electrostatic pinning device was used. The quenching temperature is the chill roll temperature as shown in Table 1. An additional take-off was employed to maintain an even tension on the film when passing the slitting device. The film was slit into ten tapes by means of special coated, industrial blades, at room temperature. The amorphous tapes were passed through a 4 m long hot-air oven, and a stretching unit consisting of six oil - heated godets completed the tape line. Ten precision cross winders were used to wind the tapes into bobbins. No heat setting was applied.

*Machine 2*

A second laboratory-scale line was used by additionally equipping machine 1 with an extruder having 35 mm screw diameter, a L/D ratio of 30 and a 210 mm wide slot die to maintain a more homogeneous melt. To get a more precise temperature profile and less sticking on the film, a new 500 mm diameter chill roll was used and installed next to the first extruder. The line had the same first heating oven for the drawing. The machine was provided with an additional godet unit and also a second hot-air oven for heat-setting of the drawn tapes at a temperature given in Table 1. The drier, the slitting unit, the first oven for drawing and the winders were identical with the ones used in machine 1.

*Machine 3*

An industrial-scale line provided with a 90 mm extruder having a 1500 liters dehumidifying hot air drier for 5 hours at 170°C was used. To bring in the additives, a side-feed masterbatch dosing unit was used alongside the smooth feeding section of the extruder. A 800 mm wide slot die was modified with additional heating zones (250°C - 320°C) for processing polyesters. After draw down of the molten web at a temperature as shown in Table 1, the film width was 600 mm. The chill roll, slitting unit and the first hot-air oven were identical with the ones used in machine 2. Ceramic blades were used for slitting at room temperature. The machine was provided with an extended stretching unit equipped with oil heated godets. Next to the first hot-air oven, an extended stretching unit equipped with oil heated godets was installed. In addition to the heat setting oven, a third godet unit maintained an even thermal stabilization of the tapes. This unit was equipped with two water-cooled godets. For taking up and spooling the finished tapes, 120 precision cross-winding heads were located next to the heat-setting unit.

**Methods**

*Density*

Density of a film sample was measured in a density gradient column set up for the density range of conventional PET (1330 kg/m$^3$ to 1445 kg/m$^3$).

The percentage crystallinity $X_c$ was computed from density measurement with the equation:

$$Xc = \left(\frac{\rho_c}{\rho_{sample}}\right) \cdot \frac{(\rho_{sample} - \rho_a)}{(\rho_c - \rho_a)} \times 100$$

wherein $\rho_c$ = 1455 kg/m$^3$ for 100% crystalline PET, and $\rho_a$ = 1333 kg/m$^3$ is the density of amorphous PET. Typically, for a cast amorphous film of PET, $\rho_{sample}$ was between 1333 to 1335 kg/m$^3$; which translates to 0 - 1.8% crystallinity.

The cast amorphous film made of polyester/LLDPE has a density measured similarly of lower than 1333 kg/m$^3$ which also translates to 0 - 1.8% crystallinity.

*Moisture content*

The moisture content of polyester pellets was estimated by the I.V. drop (the difference in I.V. of chips and cast film). This I.V. drop was less than 0.03 dUg for all samples, which indicates that the moisture content was lower than 50 ppm.

*Intrinsic viscosity (I. V.)*

The I.V. was measured with a dilute solution of the polyester resin in a 3:2 mixture of phenol-1, 2 dichlorobenzene solution, at 25°C (single measurement). The I.V. was calculated from the measurement of relative viscosity $\eta_r$ for a single polymer concentration (c = 0.5%) by using the Billmeyer equation:

$$I.V.= [\eta] = 0.25 \, (\eta_r - 1 + 3 \ln \eta_r)/c$$

*Haze*

Haze is the percentage of the total transmitted light that after passing through a film sample is scattered by more than 2.5° (see ASTM D-1003-97). The haze was measured with Haze Gard Plus instrument from BYK Gardner on the cast amorphous film before tape slitting. Surface and bulk contributions were not separated.

*Clarity*

Clarity is a measure of the light that is scattered less than 0.1 when passing through the film (see ASTM 1746). It was measure with Haze Gard Plus from BYK Gardner; it is indicated as a percentage of the incident light. Clarity was calculated by using the following equation:

$$\% \text{ Clarity} = [\ I_{(t<0.1°)} / I_i]\ x\ 100,$$

wherein, $I_{(t<0.1°)}$ = intensity of transmitted light deflected < 0.1°
$I_i$ = intensity of incident light from source

*Gloss*

Gloss of the cast amorphous films was measured at 60° using a gloss meter from Sheen. The results are given in GU (gloss units).

*Microscopy of oriented tapes*

The drawn tapes were examined by scanning electron microscopy (SEM).
The LLDPE was dispersed in micron sized domains; this can be seen by imaging with back-scattered electrons. In this case, the polyester matrix phase appears darker color, while the LLDPE domains appear lighter color. The voids presence was evaluated by observing the domain boundaries, between the polyolefin and polyester phase.

*Tenacity and Elongation at break*

The tenacity and the elongation of the uniaxially oriented tapes was measured according to ISO 2062 (DIN 53834) on Basic Line Z005 from Zwick/Roell, with a 500 mm free clamping length for the tape, and a testing speed of 250 mm/min.

*Shrinkage*

Residual shrinkage measured by a hot air method following ASTM D - 4974 - 93 and DIN 53866. The sample length was about 600 mm. One end of the sample was fixed in the hot air oven by means of a clamp. The tape rested freely on the drum (which was directly attached to the scale) and one of the prepared weights (1 g/100 den) was fastened to the other end of the tape. The distance from the drum to the weight was approximately 100 mm. The test temperature used was 130°C with an exposure time of 2 minutes. The residual shrinkage was indicated directly on the scale in percent.

*Linear density (denier)*

This characteristic was measured by using a Zwick/Roell Basilc Line Z2005 instrument.
Denier is known to be the weight of 9000 m of tape or fibre.

**Example 1 (comparative)**

PET tapes, without any additives, were made by using machine 1. A bottle grade co-PET with 1.6 wt% isophthalic acid comonomer (I.V. of 0.84 dUg) without any additives was used to cast a highly transparent amorphous film (haze of 1.3%) of 8 cm width; the film was slit into five tapes. After drawing in a single oven at 115°C, the draw ratio was 5:1; no heat setting was applied. The line speed was 45 m/min. At this low line speed, and with only five tapes, no sticking was noticed after slitting. The tapes after drawing were highly transparent (no voiding was observed). The tapes were wound-up on bobbins.

**Example 2 (comparative)**

A bottle grade co-PET with 2 wt% isophthalic acid comonomer (I.V. of 0.84 dL/g), without containing any additives, was used to cast a film and make slit tapes by using machine 2. The cast film width was 120 mm and eight tapes were slit and drawn to a draw ratio of 5.3:1. The line speed was 190 m/min. Again, with just 8 tapes, no sticking was noticed after slitting.

The bobbins collected had a 2 cm thick layer of wound tape. The bobbins had a non-cylindrical shape and showed various defects, such as "dog bone" shaped appearance (smaller diameter in the centre and bulging towards the end of the bobbins). Such misshaped bobbins cannot be used in the weaving loom.

**Example 3 (comparative)**

A bottle grade co-PET (I.V. 0.84 dL/g with 1.6 wt% isophthalic acid) was used was used to cast a film and make slit tapes by using machine 3. The cast film had an I.V. of 0.81 dUg. With this machine, the cast film was 600 mm wide and 120 tapes were slit. The cast film thickness was chosen such that after a draw ratio of about 5:1, the tape would have a thickness of about 25 $\mu$m; the width of the tape after slitting was about 2.8 mm.

However, with such a large number of tapes in close proximity, sticking to each other of many of the amorphous tapes occurred after slitting, before entrance into the first oven; separation of the stuck tapes was not possible. This jammed the line and continuous operation was not possible. Further the bobbins showed distortions, arising from the difficulty of the tape to slide along the bobbin during wind-up.

Although continuous operation of the tape production line was not possible, still several hundred metres of tape were collected on the distorted bobbins, and hence measurement of mechanical properties could be made. The actual draw ratio, the tape thickness and width after drawing and the mechanical properties obtained are shown in Table 1. An acceptable tenacity of 6.3 g/denier was achieved and the line speed was 140 m/min. The limitation is thus not the mechanical property or the production speed but rather the inability to run the line without interruption.

**Example 4 (comparative)**

1.8 wt % of calcium carbonate was added as a masterbatch during film casting of a PET copolymer (I.V. of 0.79 dUg, 2% isophthalic acid comonomer). This material is commonly used as anti-block agent in PP tapes. Using machine 3 (the operation conditions are shown in Table 1), a 600 mm wide film was cast and slit into 120 tapes and wound on bobbins. The line speed was 170 m/min. With the addition of calcium carbonate, the sticking after slitting was reduced, but not eliminated. A I.V. drop of more than 0.03 dUg was observed due to moisture present in $CaCO_3$ and as result, the tenacity drops down to below 6 g/denier, which is not desirable. Further, Table 2 shows that adding calcium carbonate causes gloss reduction and loss of clarity.

**Example 5 (comparative)**

This experiment was also conducted by employing machine 3, using a PET homopolymer with I.V. of 0.84 dUg. 2 wt. % $TiO_2$ was added as a masterbatch during film casting. The 600 mm wide film formed was subsequently slit into 120 tapes.

Low tenacity of the tapes (4.9 g/denier) and sticking of tapes after slitting was observed (Table 1). Cylindrical bobbins could only be obtained at lower line speed of 100 m/min. Further, Table 2 shows that addition of $TiO_2$ causes the highest opacity. Also, $TiO_2$ causes machine wear.

**Example 6 (comparative)**

This experiment was conducted on machine 3, using a PET homopolymer with an I.V. of 0.84 dUg. 2 wt% of barium sulphate (4.2 $\mu$m mean particle size) masterbatch, was added during film casting. The 600 mm wide film was slit into 120 tapes (the process conditions for tape production are shown in Table 1). While the tenacity of 6.6g/deier was acceptable, sticking of tapes after slitting was observed. Cylindrical bobbins could only be obtained at lower line speed of 100 m/min.

**Example 7 (comparative)**

This experiment was conducted on machine 3, using a PET homopolymer with I.V. of 0.84 dUg. 2 wt. % of a commercially available impact modifier masterbatch (typically added for certain PET applications) was used during film casting. The 600 mm wide film obtained was slit into 120 tapes (the process conditions for tape production are shown in Table 1). The tenacity and draw ratio were found to have relatively low values (Table 1).

Sticking of tapes after slitting was observed, leading to frequent interruption of the tape production line. Cylindrical bobbins could only be obtained at lower line speed of 100 m/min. The maximum workable draw ratio was 5:1 and so only a tape tenacity of 5.5 g/denier could be achieved (Table 1).

## Example 8 (comparative)

The experiment was conducted on machine 3, using a PET homopolymer with I.V. of 0.84 dL/g. A commercially available slip agent, based in a PET carrier system was tried. 2 wt% of the slip agent was added in masterbatch form during the film casting step (the process conditions for tape production are shown in Table 1). The 600 mm wide film was slit into 120 tapes. The elongation at break value was relatively low (Table 1).

Adding this slip additive did not stop sticking of tapes after slitting, on-line breakages and line stoppage.

## Example 9 (comparative)

This experiment was conducted on machine 3, using a PET homopolymer with I.V. of 0.84 dUg. 2 wt% of a commercially available anti-block agent, typically used for BOPET films was added during the film casting step. The 600 mm wide film was slit into 120 tapes (the process conditions for tape production are shown in Table 1).

Film production was difficult due to holes and breaks, which caused on-line breakages and line stoppage.

## Example 10 (comparative)

This experiment was conducted on machine 3, using a PET homopolymer with I.V. of 0.84 dL/g. 2 wt% of a commercially available chain extender for PET was added as a masterbatch during film casting (the process conditions are shown in Table 1). The 600 mm wide film was quenched on a chill roller at a temperature of 35°C.

The addition of the chain extender caused problems in the film casting itself; namely, voids with bubbles and spots were observed in the cast film. Tapes could not be produced.

## Example 11 (comparative)

This experiment was conducted in machine 3, using PET homopolymer with I.V. of 0.84 dUg. During film casting, 2 wt% of a commercially available LDPE was added. The film width was 600 mm and 120 tapes were slit from it; the line speed was 120 m/min (the process conditions are shown in Table 1).

The tenacity was 7.4 g/denier, while the shrinkage at 130°C was increased to 7.6%. Frequent tape breakages were observed during production, so long-term stable running of the tape line was affected. From this experiment it was concluded that LDPE was not a useful additive.

## Example 12

This experiment was conducted in machine 3 by using a PET homopolymer with I.V. of 0.84 dUg. 2.8 wt. % of a commercially available C8-LLDPE was introduced in the form of pellets during film casting, using the masterbatch feeding facility attached to the extruder (the process conditions are shown in Table 1). The C8-LLDPE was an ethylene-octene copolymer having 7.6 mol % of 1-octene comonomer; a density of 935 kg/m$^3$; and a melt index of 2.5 g/10 min using 190°C/2.16 kg. The cast film was 600 mm wide and 120 tapes were slit from it. The drawn-tape width was 2.8 mm and the thickness was 22 $\mu$m. Sticking of the tapes after slitting did not occur. The uniaxially oriented tapes could be wound-up on to wind-up tubes using cross winding without any problems to obtain cylindrical bobbins. The tapes did not break and the line could be run at a speed of about 120 m/min for several hours without interruption. Thus, C8 LLDPE allows to run the tape line continuously and by preventing sticking of tapes and lowering tape-on-tape friction on the bobbin during cross winding.

Also, by introducing this LLDPE, high draw ratio of 6.3:1 and very good mechanical properties were obtained (Table 1, tenacity of 7.5 g/denier or tensile strength of 945 MPa). Scanning electron microscopy did not show voiding between the LLDPE particles and the PET matrix in the uniaxially oriented tape. The combination of moderate haze and good gloss characteristics led to an attractive silvery appearance, giving a suitable background for ink-printing. The optical properties of the 2.8% C8 LLDPE-PET film are shown in Table 2.

## Example 13

This experiment was conducted with machine 3, at a higher line speed of 300 m/min and using a PET homopolymer with I.V. of 0.84 dUg. 5 wt. % of the same C8-LLDPE used in Example 12 was introduced during film casting, using the masterbatch feeding facility on the extruder (the process conditions are shown in Table 1). The cast film was 600 mm wide and 120 tapes were slit from it. The drawn-tape width was 3 mm and the thickness was 30 μm.

Sticking of tapes after slitting did not occur. The tapes could be wound-up onto wind-up tubes using cross winding without any breakage or any other problems occurring; the bobbins had the correct cylindrical appearance, and were fit for placing in the loom. The tapes did not break and the line could be run for several hours without interruption, at a speed of 300 m/min.. Operating at such a speed without stoppage was impossible with the other additives. Further, the tape properties were not compromised. The addition of LLDPE allowed a high draw ratio (6:1); high tape tenacity (7.4 g/denier); a high elongation to failure (15.6%); and a residual shrinkage of 6.9 % (Table 1). No voiding was observed between the LLDPE particles and the PET matrix.

## Example 14

This experiment was conducted in machine 3 using a PET homopolymer with I.V. of 0.90 dUg. 5 wt. % of the same C8-LLDPE as used in Example 12 was introduced during film casting, using the masterbatch feeding facility on the extruder (the process conditions are shown in Table 1).

Sticking and twinning of tapes after slitting did not take place. The tapes could be wound-up onto bobbins without any breakage or any other problems occurring. As sticking of the tapes did not occur, the line could be run for several hours without interruption. The addition of LLDPE allowed a high draw ratio (6.2:1) and a high tape tenacity (7.4 g/denier) was achieved, even with a tape thickness of 55 μm (linear density = 1750 denier) (Table 1). Such high tape thickness is needed for instance for applications such as geotextile fabrics.

## Example 15

This experiment was conducted in machine 3 using a PET homopolymer with I.V. of 0.84 dUg. 5 wt. % of a commercially available C4-LLDPE copolymer was introduced during film casting, using the masterbatch feeding facility on the extruder (the process conditions are shown in Table 1). This C4-LLDPE sample had 3.9 mol% of 1-butene comonomer; a density of 922 kg/m$^3$; and a melt index of 0.90 g/10 min.

Sticking and twinning of tapes after slitting did not occur. The tapes could be wound-up onto bobbins without breakage or any other problems occurring. The addition of C4-LLDPE allowed a high draw ratio (6:1) and a high tape tenacity (7.3 g/denier) was achieved (Table 1).

## Example 16

This experiment was conducted in machine 3 using a PET copolymer (with 2 % wt/wt of isophthalic acid comonomer and an I.V. of 0.84 dUg). 5 wt. % of a commercially available C6-LLDPE (melt flow index = 2.8 g/10 min., density of 0.918 g/cm$^3$) was introduced during film casting, using the masterbatch feeding facility on the extruder (the process conditions are shown in Table 1). The C6-LLDPE had 10.4 wt % of hex-1-ene comonomer.

Sticking and twinning of tapes after slitting did not occur. The tapes could be wound-up to make cylindrical bobbins without breakage or any other problems occurring. The addition of C6-LLDPE allowed a high draw ratio (6:1) and a tape tenacity (6.9 g/denier) was achieved; this being a co-PET the tenacity is a little lower than the other Examples 12-15 where homoPET is used with LLDPE (Table 1).

**Table 1**

| Ex. | Component (i) I.V. (dL/g) | Component (ii) | T chill roll (°C) | Cast film width (mm) | No. slit tapes | T 1st oven (drawing) (°C) | T 2nd oven (heat-setting) (°C) | Total draw ratio | Tape thickness after draw-ing ($\mu$m) | Final tape width (mm) | Linear density (denier) | TEN. (g/d) | E (%) | Shrinkage, % (130°C, 2 min) | Line speed (m/min) |
|---|---|---|---|---|---|---|---|---|---|---|---|---|---|---|---|
| 1 | 0.84 | none | 50 | 80 | 5 | 115 | - | 5:1 | | | | 5.0 | 19 | | 45 |
| 2 | 0.84 | none | 30 | 120 | 8 | 124 | 240 | 5.3:1 | | | 885 | 6.9 | 15.9 | 4.5 | 190 |
| 3 | 0.84 | none | 35 | 600 | 120 | 108 | 250 | 4.9:1 | 22 | 2.80 | 630 | 6.3 | 14.7 | 6.8 | 140 |
| 4 | 0.84 | 1.8 wt% CaCO$_3$ | 35 | 600 | 120 | 114 | 220 | 5.3:1 | 19 | 2.95 | 594 | 5.5 | 13.8 | 9.2 (180°C, 2 min) | 170 |
| 5 | 0.84 | 2 wt% TiO$_2$ | 35 | 600 | 120 | 100 | 200 | 5:1 | 26 | 3.0 | 980 | 4.9 | 16.7 | 4.1 | 100 |
| 6 | 0.84 | 2 wt% BaSO$_4$ | 35 | 600 | 120 | 100 | 220 | 5.8:1 | 25 | 2.1 | 597 | 6.6 | 10.5 | 5.0 | 120 |
| 7 | 0.84 | 2 wt% impact modifier | 35 | 600 | 120 | 100 | 200 | 5:1 | 28 | 3.0 | 1025 | 5.5 | 18 | 3.8 | 100 |
| 8 | 0.84 | 2 wt% slip agent | 35 | 600 | 120 | 100 | 220 | 6:1 | 23 | 2.8 | 820 | 7.4 | 8.8 | 5.6 | 120 |
| 9 | 0.84 | 2 wt% anti-block agent | 35 | 600 | 120 | 100 | 220 | 5.8:1 | 27 | 2.1 | 700 | 6.4 | 10.7 | 4.8 | 120 |
| 10 | 0.84 | 2 wt% chain extender | 35 | 600 | none | | | | | | | | | - | - |
| 11 | 0.84 | 2 wt% LDPE | 35 | 600 | 120 | 100 | 200 | 6:1 | 24 | 2.8 | 777 | 7.4 | 10 | 7.6 | 170 |
| 12 | 0.84 | 2.8 wt% C8 - LLDPE | 35 | 600 | 120 | 90 | 230 | 6.3:1 | 22 | 2.8 | 735 | 7.5 | 12 | 6.2 | 120 |
| 13 | 0.84 | 5wt%C8-LLDPE | 45 | 600 | 120 | 100 | 220 | 6.0:1 | 30 | 3 | | 7.4 | 15.6 | 6.9 | 300 |
| 14 | 0.90 | 5 wt% C8-LLDPE | 35 | 600 | 120 | 100 | 235 | 6.2:1 | 55 | 2.6 | 1750 | 7.4 | 10.8 | 11.1(180°C, 2 min.) | 100 |
| 15 | 0.84 | 5 wt% C4-LLDPE | 35 | 600 | 120 | 100 | 220 | 6:1 | 26 | 2.8 | 830 | 7.3 | 11 | 6.0 | 120 |
| 16 | 0.84 | 5% C6 LLDPE | 35 | 600 | 100 | 94 | 220 | 6:1 | 26 | 3.0 | 954 | 6.9 | 11.2 | 13.5(180°C, 2min.) | 120 |

TEN. - tenacity; E = elongation to break; "-" = not applicable

**Table 2**

| Example | Cast film composition | Thickness ($\mu$m) | Gloss at 60° (Gloss units) | Haze (%) | Clarity (%) |
|---|---|---|---|---|---|
| 3 | 100 wt% PET | 56 | 120 | 1.1 | 99 |
| 4 | PET with 1.8 wt% $CaCO_3$ | 55 | 101 | 11.5 | 88 |
| 5 | PET with 2 wt% $TiO_2$ | 53 | 81 | 84 | 99 |
| 7 | PET with impact modifier | 60 | 107 | 12.4 | 99 |
| 12 | PET with 2.8 wt% C8-LLDPE | 54 | 115 | 13.7 | 98 |
| 16 | Polypropylene | 50 | 69 | 15 | |
| 17 | Polyethylene | 50 | 27 | 54 | |

**Claims**

1. A tape comprising (i) from about 75 wt% to about 99.9 wt% of a thermoplastic polyester, (ii) from 0.1 wt% to about 25 wt% of a linear low-density polyethylene and (iii) from 0 wt% to about 5 wt% of other components, wherein said tape has a thickness from 5$\mu$m to 250 $\mu$m and a width from 0.5mm to 7mm.

2. The tape according to claim 1, wherein the intrinsic viscosity of the thermoplastic polyester component is at least 0.5 dL/g, measured in phenol -1, 2 dichlorobenzene at 25°C.

3. The tape according to claim 1 or 2, wherein the thermoplastic polyester is a poly(ethylene terephthalate) homopolymer or copolymer.

4. The tape according to any of the preceding claims 1-3, wherein the linear low-density polyethylene is an ethylene-1-butene copolymer, an ethylene-1-pentene copolymer, an ethylene-1-hexene copolymer, an ethylene-1-heptene copolymer or an ethylene-1-octene copolymer.

5. The tape according to claim 4, wherein the linear tow-density polyethylene is an ethylene-1-octene copolymer.

6. The tape according to any of the preceding claims 1-5, comprising from about 1.5 wt% to about 10 wt% of a linear low-density polyethylene.

7. The tape according to any one or more of the preceding claims 1-6, wherein the tape is a uniaxially oriented tape.

8. A process for making a tape according to any one or more of preceding claims 1- 7, comprising the steps of:

    (a) extruding a composition comprising from (i) about 75 wt% to about 99.9 wt% of a thermoplastic polyester; (ii) from 0.1 wt% to about 25 wt% of a linear low-density polyethylene; and (iii) from 0 wt% to about 5 wt% of other components; into a molten film and quenching said film;
    (b) slitting and drawing the obtained film in the longitudinal direction to form a plurality of uniaxially oriented tapes;
    (c) heat-setting the uniaxially oriented tapes.

9. The process according to claim 8, wherein the thermoplastic polyester is dried to less than 50 ppm of moisture content before extrusion.

10. The process according to claims 8 or 9, wherein the cast film is a substantially amorphous film.

11. The process according to any one or more of claims 8 to 10, wherein slitting of the film into tapes is performed before drawing.

12. The process according to any one or more of claims 8 to 11, wherein step (b) is carried out at a temperature of about 80 to about 130 °C and step (c) is carried out at a temperature of about 140 to about 250 °C.

13. The process according to any one or more of preceding claims 8-12 wherein at the end of the process at least one of the tapes is wound on a wind up tube so as to form a cylindrical bobbin having a length in axial direction that is greater than the width of the tape, preferably from about 15 to 50 cm.

14. Use of the tape according to any of claims 1 to 7 for making finished and semi-finished articles, preferably for making woven sacks, flexible intermediate bulk containers, jumbo bags, hot fill jumbo bags, PVC coated fabrics, carpet backing, geotextiles, self reinforced composites, metalized fabrics for solar control or fabrics for flexible electronics.

**Patentansprüche**

1. Band, umfassend (i) von etwa 75 Gew.-% bis etwa 99,9 Gew.-% an einem thermoplastischen Polyester, (ii) von 0,1 Gew.-% bis etwa 25 Gew.-% an einem linearen Polyethylen mit niedriger Dichte und (iii) von 0 Gew.-% bis etwa 5 Gew.-% an anderen Komponenten, wobei das Band eine Dicke von 5 $\mu$m bis 250 $\mu$m und eine Breite von 0,5 mm bis 7 mm aufweist.

2. Band gemäß Anspruch 1, wobei die intrinsische Viskosität der thermoplastischen Polyesterkomponente wenigstens 0,5 dl/g, gemessen in Phenol -1,2-Dichlorbenzol bei 25 °C, aufweist.

3. Band gemäß Anspruch 1 oder 2, wobei der thermoplastische Polyester ein Poly(ethylenterephthalat)-Homopolymer oder -Copolymer ist.

4. Band gemäß einem der vorstehenden Ansprüche 1-3, wobei das lineare Polyethylen mit niedriger Dichte ein Ethylen-1-Buten-Copolymer, ein Ethylen-1-Penten-Copolymer, ein Ethylen-1-Hexen-Copolymer, ein Ethylen-1-Hepten-Copolymer oder ein Ethylen-1-Octen-Copolymer ist.

5. Band gemäß Anspruch 4, wobei das lineare Polyethylen mit niedriger Dichte ein Ethylen-1-Octen-Copolymer ist.

6. Band gemäß einem der vorstehenden Ansprüche 1-5, umfassend von etwa 1,5 Gew.-% bis etwa 10 Gew.-% an einem linearen Polyethylen mit niedriger Dichte.

7. Band gemäß einem oder mehreren der vorstehenden Ansprüche 1-6, wobei das Band ein uniaxial orientiertes Band ist.

8. Verfahren zum Herstellen eines Bands gemäß einem oder mehreren der vorstehenden Ansprüche 1-7, umfassend die Schritte:

   (a) Extrudieren einer Zusammensetzung, umfassend (i) von etwa 75 Gew.-% bis etwa 99,9 Gew.-% an einem thermoplastischen Polyester; (ii) von 0,1 Gew.-% bis etwa 25 Gew.-% an einem linearen Polyethylen mit niedriger Dichte; und (iii) von 0 Gew.-% bis etwa 5 Gew.-% an anderen Komponenten; zu einem geschmolzenen Film und Abschrecken des Films;
   (b) Längsschneiden und Ziehen des erhaltenen Films in Längsrichtung, um eine Vielzahl von uniaxial orientierten Bändern zu erhalten;
   (c) Thermofixieren der uniaxial orientierten Bänder.

9. Verfahren gemäß Anspruch 8, wobei der thermoplastische Polyester auf weniger als 50 ppm Feuchtegehalt vor der Extrusion getrocknet wird.

10. Verfahren gemäß Ansprüchen 8 oder 9, wobei der gegossene Film ein im Wesentlichen amorpher Film ist.

11. Verfahren gemäß einem oder mehreren der Ansprüche 8 bis 10, wobei das Längsschneiden des Films zu Bändern vor dem Ziehen durchgeführt wird.

12. Verfahren gemäß einem oder mehreren der Ansprüche 8 bis 11, wobei Schritt (b) bei einer Temperatur von etwa 80 bis etwa 130 °C durchgeführt wird und Schritt (c) bei einer Temperatur von etwa 140 bis etwa 250 °C durchgeführt wird.

13. Verfahren gemäß einem oder mehreren der Ansprüche 8-12, wobei am Ende des Verfahrens wenigstens eines der Bänder auf eine Wickelhülse aufgewickelt wird, um einen zylindrischen Wickelkörper zu bilden, der eine Länge in axialer Richtung aufweist, die größer als die Breite des Bands ist, vorzugsweise von etwa 15 bis 50 cm.

14. Verwendung des Bands gemäß einem der Ansprüche 1 bis 7 zum Herstellen von Fertig- oder Halbfertiggegenständen, vorzugsweise zum Herstellen von gewebten Säcken, flexiblen Zwischenbehältern für Schüttgut, Jumbo-Beuteln, Jumbo-Beuteln zum Heißfüllen, PVC-beschichtetem Gewebe, Teppichrücken, Geotextilien, selbstverstärkten Verbundmaterialien, metallisierten Geweben für den Sonnenschutz oder Geweben für flexible Elektronik.

## Revendications

1. Ruban comprenant (i) d'environ 75 % en poids à environ 99,9 % en poids d'un polyester thermoplastique, (ii) de 0,1 % en poids à environ 25 % en poids d'un polyéthylène de basse densité linéaire et (iii) de 0 % en poids à environ 5 % en poids d'autres constituants, ledit ruban ayant une épaisseur de 5 $\mu$m à 250 $\mu$m et une largeur de 0,5 mm à 7 mm.

2. Ruban selon la revendication 1, dans lequel la viscosité intrinsèque du constituant polyester thermoplastique est d'au moins 0,5 dl/g, mesurée dans du phénol-1,2-dichlorobenzène à 25 °C.

3. Ruban selon la revendication 1 ou 2, dans lequel le polyester thermoplastique est un homopolymère ou un copolymère de poly(téréphtalate d'éthylène).

4. Ruban selon l'une quelconque des revendications précédentes 1 à 3, dans lequel le polyéthylène de basse densité linéaire est un copolymère d'éthylène-1-butène, un copolymère d'éthylène-1-pentène, un copolymère d'éthylène-1-hexène, un copolymère d'éthylène-1-heptène ou un copolymère d'éthylène-1-octène.

5. Ruban selon la revendication 4, dans lequel le polyéthylène de basse densité linéaire est un copolymère d'éthylène-1-octène.

6. Ruban selon l'une quelconque des revendications précédentes 1 à 5, comprenant d'environ 1,5 % en poids à environ 10 % en poids d'un polyéthylène de basse densité linéaire.

7. Ruban selon l'une ou plusieurs quelconques des revendications précédentes 1 à 6, le ruban étant un ruban orienté uniaxialement.

8. Procédé de fabrication d'un ruban selon l'une ou plusieurs quelconques des revendications précédentes 1 à 7, comprenant les étapes qui consistent à :

   (a) extruder une composition comprenant (i) d'environ 75 % en poids à environ 99,9 % en poids d'un polyester thermoplastique ; (ii) de 0,1 % en poids à environ 25 % en poids d'un polyéthylène de basse densité linéaire ; et (iii) de 0 % en poids à environ 5 % en poids d'autres constituants pour produire un film fondu et refroidir ledit film ;
   (b) refendre et étirer le film obtenu dans la direction longitudinale pour former une pluralité de rubans orientés uniaxialement ;
   (c) thermofixer les rubans orientés uniaxialement.

9. Procédé selon la revendication 8, dans lequel le polyester thermoplastique est séché jusqu'à l'obtention d'une teneur en humidité inférieure à 50 ppm avant l'extrusion.

10. Procédé selon les revendications 8 ou 9, dans lequel le film coulé est un film sensiblement amorphe.

11. Procédé selon l'une ou plusieurs quelconques des revendications 8 à 10, dans lequel la refente du film pour produire des rubans est exécutée avant l'étirage.

12. Procédé selon l'une ou plusieurs quelconques des revendications 8 à 11, dans lequel l'étape (b) est exécutée à une température d'environ 80 à environ 130 °C et l'étape (c) est exécutée à une température d'environ 140 à environ 250 °C.

13. Procédé selon l'une ou plusieurs quelconques des revendications 8 à 12, dans lequel, à la fin du procédé, au moins l'un des rubans est enroulé sur un tube d'enroulement de façon à former une bobine cylindrique ayant une longueur dans la direction axiale qui est supérieure à la largeur du ruban, préférablement d'environ 15 à 50 cm.

**14.** Utilisation du ruban selon l'une quelconque des revendications 1 à 7 pour fabriquer des articles finis et semi-finis, préférablement pour fabriquer des sacs tissés, des grands récipients pour vrac souples, des sacs grand format, des sacs grand format remplis à chaud, des tissus enduits de PVC, des envers de tapis, des géotextiles, des composites auto-renforcés, des tissus métallisés pour le contrôle solaire ou des tissus pour des composants électroniques flexibles.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03087200 A
- US 6589463 B1
- EP 0361758 A2
- US 3548048 A
- US 4064112 A
- US 4161578 A
- US 7803857 B

### Non-patent literature cited in the description

- **F. HENSEN.** Man-Made Fiber Year Book. 1992, 45-48
- Production of polyolefin tapes. **F. HENSEN.** Man-Made Fiber Year Book. 1992, 45-48
- **K.J. PHILIPS ; T.K. GHOSH.** The Technology of Polypropylene Tape Yarns : Processing and Applications. *Textile Progress,* 2003, vol. 33, 1-53
- **F. HENSEN.** Production of Polyolefin Tapes. *CFI Man-made Fiber Year Book,* 1992, 44-48
- Extrusion of Film Tapes. **F. HENSEN ; STAUSBERG.** Plastics Extrusion Technology. Hanser, 1997, 317
- Encyclopaedia of Polymer Science and Engineering. John Wiley and Sons, 1988, vol. 12
- **W. GOERLITZ ; A. ITO.** Substrates for flexible magnetic recording media: The role of base films for modern performance requirements. *Journal of Magnetism and Magnetic Materials,* 1993, vol. 120, 76-82
- **L. MARQUEZ et al.** *Polymer Bulletin,* 1998, vol. 41 (2), 191-198
- **G. GUERRICA-ECHEVARRIA et al.** *Polymer Engineering and Science,* 2006, vol. 46 (2), 172-180
- Handbook of Polyethylene. 2000, 43-66
- Polyethylene. 1960